# EUROPEAN PATENT APPLICATION

(11) **EP 2 365 486 A1**
(43) Date of publication of application: **14.09.2011**
(21) Application number: 11157568.4
(22) Date of filing: 10.03.2011
(51) Int. Cl.: G11B 19/12, G11B 19/28

(54) **Optical disc drive and method for reading data from optical disc**

(30) Priority: 12.03.2010 JP 2010055735
(71) Applicant: Panasonic Corporation, Kadoma-shi Osaka 571-8501 (JP)
(72) Inventor: Sato, Takahiro, Chuo-ku Osaka 540-6207 (JP); Yoshimi, Akihito, Chuo-ku Osaka 540-6207 (JP); Shimamoto, Takeshi, Chuo-ku Osaka 540-6207 (JP); Yoshida, Hiroshi, Chuo-ku Osaka 540-6207 (JP)
(74) Representative: Grünecker, Kinkeldey, Stockmair & Schwanhäusser Anwaltssozietät

(57) **Abstract**

An optical disc drive and optical disc reading method according to the present invention is designed to perform a read operation with good stability even on a slim disc that could produce a significant axial runout. For that purpose, the optical disc drive determines, by the time it has taken for the number of revolutions of a motor that rotates the optical disc loaded to reach a predetermined number, whether the disc loaded is a lightweight disc or not (in Step **202**). The drive also determines, by a signal obtained from the optical disc, what the size of the optical disc loaded is (in Step **204**). And if the drive decides, based on results of these processing steps, that the disc loaded is a slim disc, then the drive increases the number of revolutions of the optical disc to a predetermined number or more in Step **207** to minimize the influence of axial runout.

## Description

### BACKGROUND OF THE INVENTION

### 1. Field of the Invention:

The present invention relates to an optical disc drive for reading data from an optical disc loaded and also relates to a method for recognizing the type of the optical disc loaded.

### 2. Description of the Related Art:

Various types of optical discs, including Blu-ray Discs (BDs), DVDs and CDs, are currently available but not all of them have the same size. Some of them have a diameter of 12 cm (and will be referred to herein as "12 cm discs") and others have a diameter of 8 cm (and which will be referred to herein as "8 cm discs"). That is why when loaded with an optical disc, an optical disc drive needs to change the position to emit a light beam from according to the size of the disc, and therefore, has to decide whether the disc loaded is a 12 cm disc or an 8 cm disc. Such a disc type recognition process will be referred to herein as "12 cm/8 cm disc type recognition".

In general, a 12 cm disc has a greater moment of inertia than an 8 cm disc. In other words, a 12 cm disc is less easy to rotate than an 8 cm disc. That is to say, the moment of inertia of an object is a quantity indicating how difficult it is to rotate that object. Supposing two discs are made of the same material and have the same thickness, one of the two discs with the longer diameter should have the greater moment of inertia than the other disc with the shorter diameter. For that reason, if the 12 cm disc and 8 cm disc are rotated separately with the same voltage applied to the same disc motor, it will take a longer time for the 12 cm disc to increase its number of revolutions to the target one than the 8 cm disc does. In view of these considerations, according to a conventional 12 cm/8 cm disc type recognition process, the optical disc loaded is determined to be either a 12 cm disc or an 8 cm disc by paying special attention to their difference in moment of inertia. Specifically, for that purpose, with the same voltage applied to a disc motor that rotates those optical discs separately, it is measured how long it takes for the disc motor to increase its number of revolutions to a predetermined one with the disc mounted, and the type of the disc loaded is recognized by the length of that time it has taken. See Japanese Patent Application Laid-Open Publication No. 2003-249004, for example (which will be referred to herein as "Patent Document No. 1" for convenience sake).

According to the method disclosed in Patent Document No. 1, however, a so-called "slim disc" or "eco disc" (which will be collectively referred to herein as a "slim disc" and) which has become more and more popular year by year cannot be properly distinguished from an 8 cm disc. As will be described later, a slim disc certainly has a smaller thickness but does have a diameter of 12 cm. Also, apart from the thickness, a slim disc has quite the same physical structure (including a pit size and a track structure) as a normal DVD-ROM (which is a 12 cm disc). An example of such a slim disc is disclosed in United States Patent Application Publication No. 2008/0115156.

A slim disc has a thinner substrate and a lighter weight. That is why if a slim disc is loaded into an optical disc drive and rotated by its disc motor, it will take a shorter amount of time for the disc motor, to which the same difference is applied, to increase its number of revolutions to a predetermined one than when a normal 12 cm disc is loaded to it. For that reason, even though the slim disc is actually a 12 cm disc, it could be taken for an 8 cm disc by mistake, which is a problem.

Also, as a slim disc has a thinner substrate, the slim disc is more likely to cause a disc flutter (which is also called an "axial runout or deflection" or "surface runout") which is a variation in height as measured along the circumference of the disc. For that reason, it is more difficult to get servo controls done with good stability during reading than when a disc with a normal thickness is loaded, and therefore, the disc drive needs to decide whether the disc loaded is a slim disc or not. Nevertheless, no information indicating its identity as a slim disc is recorded on a slim disc, which just carries disc identification information indicating that it is a DVD-ROM. Consequently, there is a growing demand for a more accurate disc type recognition method for determining, without relying on the disc identification information, whether the disc loaded is a slim disc or not.

It is therefore an object of the present invention to provide an optical disc drive that can perform a read operation with stability even on a slim disc and also provide a method for reading data from such an optical disc.

### SUMMARY OF THE INVENTION

An optical disc drive according to the present invention can read data from both a normal thickness disc, which has a thickness of 1.2 mm and that has stored data thereon, and a slim disc, which has a thickness of 1.0 mm or less and that has also stored data thereon. The drive includes: a motor for rotating a disc loaded; an optical head for focusing a light beam on the disc that is being rotated by the motor; and a control section for controlling the operations of the motor and the optical head. When reading data from the slim disc, the control section makes the motor or the optical head operate under a different operating condition than when reading data from the normal thickness disc.

In one preferred embodiment of the present invention, the operating condition includes at least one of the number of revolutions of the motor, the gain of a focus control, and a radial location on the disc at which the light beam that irradiates the disc needs to be focused.

In another preferred embodiment, the control section includes a disc type recognition section for determining whether the disc loaded is a slim disc or not.

In still another preferred embodiment, if the disc loaded is the slim disc, the control section raises the lower limit of the number of revolutions of the motor.

In yet another preferred embodiment, if data cannot be read properly from the disc loaded by operating the motor and the optical head under an operating condition for reading the data from the normal thickness disc, at least a part of that operating condition is changed into an operating condition for reading data from the slim disc.

An optical disc reading method according to the present invention is a method for reading data from an optical disc loaded by using an optical disc drive that is compatible with both a normal thickness disc, which has a thickness of 1.2 mm and that has stored data thereon, and a slim disc, which has a thickness of 1.0 mm or less and that has also stored data thereon. The method includes the steps of: rotating the optical disc loaded; irradiating the optical disc with a light beam; and if the optical disc loaded is the slim disc, making the optical disc drive operate under a different operating condition from when reading data from the normal thickness disc.

In one preferred embodiment of the present invention, the method includes a disc type recognizing step for determining whether the disc loaded is the slim disc or not.

In another preferred embodiment, the method includes: a first disc type recognizing step for determining, depending on how long it has taken for the number of revolutions of a motor that rotates the optical disc to reach a predetermined number, whether the optical disc loaded is a lightweight disc or not; and a second disc type recognizing step for determining, based on a signal that has been obtained from the disc loaded, whether the optical disc is an 8 cm disc or a 12 cm disc. If the optical disc loaded has been determined to be a lightweight disc and a 12 cm disc as a result of the first and second disc type recognizing steps, respectively, then the optical disc loaded is recognized to be a slim disc.

In an alternative preferred embodiment, the method includes: a first disc type recognizing step for determining, depending on how long it has taken for the number of revolutions of a motor that rotates the optical disc to reach a predetermined number, whether the optical disc loaded is a lightweight disc or not; and a second disc type recognizing step for determining, based on a signal that has been obtained from the disc loaded, whether the optical disc is an 8 cm disc or a 12 cm disc. If the optical disc loaded has been determined to be a lightweight disc and a 12 cm disc as a result of the first and second disc type recognizing steps, respectively, then it is determined that disc slippage has occurred.

In this particular preferred embodiment, the second disc type recognizing step includes the steps of: if the optical disc has been determined to be an 8 cm disc, moving an optical head to a radial location outside of a data area; and if either the surface or a storage layer of the optical disc loaded has been detected by a focus error signal, determining the optical disc loaded to be a 12 cm disc.

In a specific preferred embodiment, the second disc type recognizing step includes the steps of: retrieving identification information of the optical disc from the optical disc loaded; and determining, by reference to disc size information included in the identification information, whether the optical disc is a 12 cm disc or not.

In another specific preferred embodiment, the method further includes a third disc type recognizing step for determining the optical disc loaded to be a slim disc if a signal obtained from the optical disc loaded indicates that the axial runout of the optical disc is greater than a predetermined value.

In this particular preferred embodiment, the third disc type recognizing step includes the steps of: moving the optical head to a radial location in an outer area of a 12 cm disc; and measuring the amount of focus drive current that has flowed while the disc makes one turn with a focus control turned ON and determining, by the amount of the focus drive current, whether the optical disc loaded is a slim disc or not.

In a specific preferred embodiment, the method includes the step of measuring the amounts of the focus drive current that flows when the number of revolutions of the motor is large and when the number of revolutions of the motor is small, respectively, and determining the optical disc loaded to be a slim disc if the difference between the amounts of current measured in those two situations is greater than a predetermined value.

In yet another preferred embodiment, the method further includes the step of controlling the number of revolutions to a certain value or more in order to minimize the influence of the axial runout if the optical disc loaded has turned out to be a slim disc as a result of the third disc type recognizing step.

In yet another preferred embodiment, the method further includes the step of carrying out an error recovery process in order to minimize the influence of the axial runout if the optical disc loaded has turned out to be a slim disc as a result of the third disc type recognizing step.

In yet another preferred embodiment, the method further includes the step of outputting an alert that prompts the user to clean a disc turntable if the optical disc loaded has turned out to be a non-slim disc as a result of the third disc type recognizing step.

In yet another preferred embodiment, the method further includes the step of controlling the number of revolutions to a certain value or more in order to minimize the influence of the axial runout if the optical disc loaded has turned out to be a slim disc as a result of the first and second disc type recognizing steps.

In yet another preferred embodiment, the method further includes the step of carrying out an error recovery process in order to minimize the influence of the axial runout if the optical disc loaded has turned out to be a slim disc as a result of the first and second disc type recognizing steps.

In yet another preferred embodiment, the method further includes the step of outputting an alert that prompts the user to clean a disc turntable if it has turned out as a result of the first and second disc type recognizing steps that disc slippage has occurred.

In yet another preferred embodiment, the method further includes the step of decreasing acceleration, with which the disc in rest position starts to be rotated from next time on, if it has turned out as a result of the first and second disc type recognizing steps that disc slippage has occurred.

In yet another preferred embodiment, the method further includes the step of increasing a clamping force, with which the disc in rest position starts to be rotated from next time on, if it has turned out as a result of the first and second disc type recognizing steps that disc slippage has occurred.

According to the present invention, when loaded with a slim disc, the optical disc drive operates under a different operating condition from when loaded with a normal thickness disc, thereby performing a read operation with good stability even on the slim disc that has less rigidity, and will produce a greater axial runout, than the normal thickness disc.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

FIG. **1(a)** is a top view of an optical disc **101** and FIG. **1(b)** is a schematic cross-sectional view thereof.

FIGS. **2(a), 2(b)** and **2(c)** are schematic cross-sectional views illustrating a 12 cm disc, an 8 cm disc, and a slim disc, respectively.

FIG. **3** is a block diagram illustrating an exemplary configuration for an optical disc drive according to the present invention.

FIG. **4** is a block diagram illustrating a detailed configuration for the optical disc drive of the first preferred embodiment.

FIG. **5** is a flowchart showing the overall procedure of determining what type of optical disc has been loaded into the optical disc drive according to the first preferred embodiment of the present invention.

FIG. **6** is a flowchart showing how to recognize the type of the disc loaded based on the time it takes for the number of revolutions to reach a target number according to the first preferred embodiment of the present invention.

FIG. **7** is a graph showing how the number of revolutions of a disc motor **102** changes with the amount of time that has passed since the motor **102** started to rotate with an optical disc mounted thereon.

FIG. **8** is a flowchart showing how to recognize the type of the disc loaded based on a signal detected from the disc according to the first preferred embodiment of the present invention.

FIG. **9** is a flowchart showing how to recognize the type of the disc loaded based on not only the time it takes for the number of revolutions to reach a target number but also a signal detected from the disc according to the first preferred embodiment of the present invention.

FIG. **10** is a graph showing how the number of revolutions changes according to the radial location on an optical disc on which a read operation is being performed.

FIG. **11** shows how a lower limit may be set to the number of revolutions by 3x CLV or 2x CLV.

FIGS. **12(a), 12(b)** and **12(c)** are schematic representations illustrating a disc that rotates with an axial runout according to the first preferred embodiment of the present invention.

FIG. **13** is a flowchart showing how to recognize the type of such a disc rotating with an axial runout as shown in FIG. **12** according to the first preferred embodiment of the present invention.

### DETAILED DESCRIPTION OF PREFERRED EMBODIMENTS

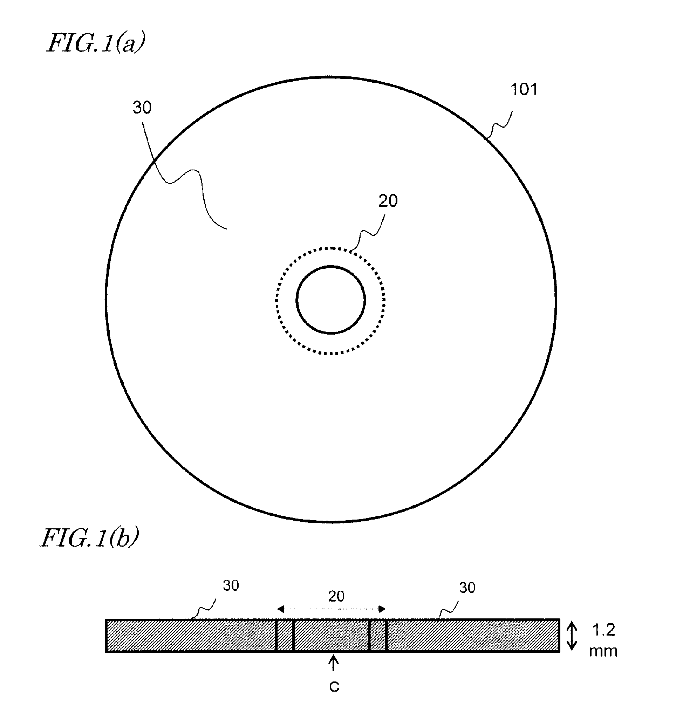

FIG. **1(a)** is a top view of an optical disc **101** and FIG. **1(b)** is a schematic cross-sectional view thereof. The optical disc **101** includes a disklike substrate, which is axisymmetric with respect to the center **C** of the disc, and one or multiple storage layers (not shown) that is/are supported on the substrate. As shown in FIGS. **1(a)** and **1(b)****,** the optical disc **101** has a clamp area **20,** which covers the disc center **C** and its neighboring area, and a data area **30,** which surrounds the clamp area **20.** Alternatively, the clamp area **20** may also be defined to cover only the range between the disc center hole and the data area **30** with the disc center hole excluded.

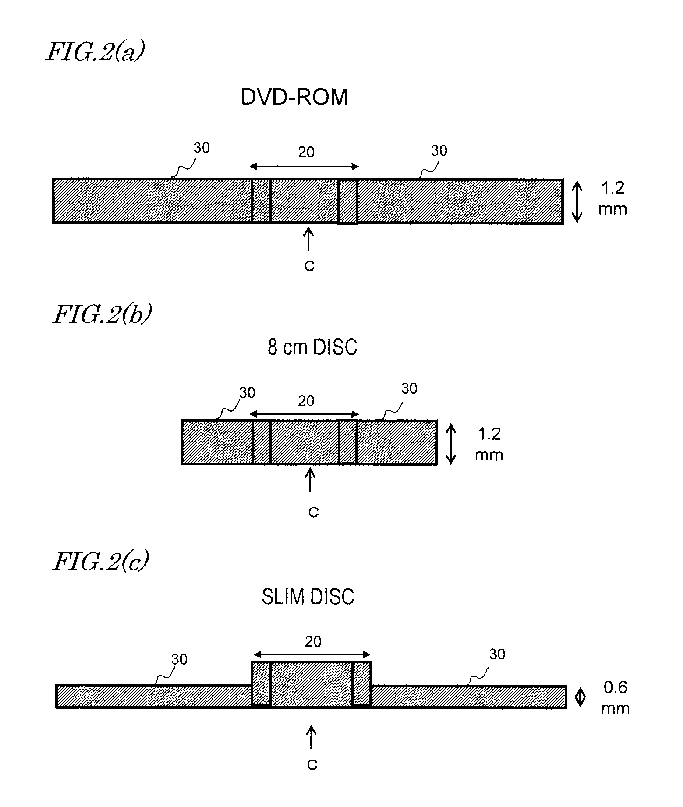

FIGS. **2(a), 2(b)** and **2(c)** are schematic cross-sectional views illustrating a 12 cm disc (such as a DVD-ROM), an 8 cm disc, and a slim disc, respectively. The measurements of these optical discs illustrated on the paper are not to scale and do not represent their actual sizes, either.

In the following description and in the claims of the present application, a normal 12 cm disc and a normal 8 cm disc will be collectively referred to herein as "normal thickness discs". As used herein, a "normal thickness disc" has a disklike portion that has a thickness of 1.2 mm and that has stored data on its data area **30.** In this case, the data area **30** is too rigid to warp easily. Normal 12 cm discs and 8 cm discs are included in normal thickness discs. On the other hand, a "slim disc" has a disklike portion that has a thickness of 1.0 mm or less and that has stored data on its data area **30.** As shown in FIG. **2(c)****,** the clamp area **20** of the slim disc has the same thickness of 1.2 mm as the counterpart of the normal thickness discs. However, the data area **30** that forms a major part of the slim disc is thinner than usual. As a result, the overall weight of the slim disc is lighter than those of normal thickness discs. The data area **30** of a slim disc is usually not rigid enough to avoid a warp. The data area **30** may have a thickness of 0.6 mm, for example, which could be either decreased or increased. As used herein, the "slim discs" include discs with any other thickness or weight as long as their thickness or weight is less than that of normal 12 cm discs.

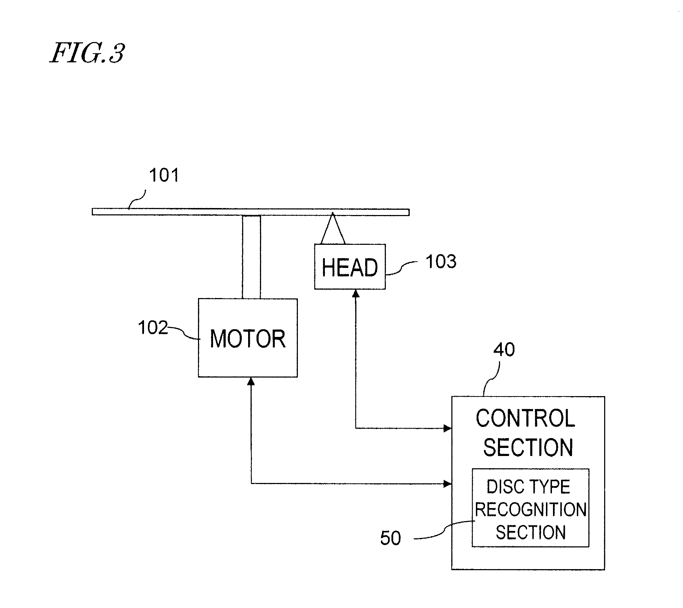

The present invention relates to an optical disc drive that can read data from both a normal thickness disc and a slim disc. As shown in FIG. **3****,** the optical disc drive of the present invention includes a motor (also called a "disc motor") **102** for rotating the disc **101** loaded, an optical head (also called an "optical pickup") **103** for focusing a light beam on the disc **101** that is being rotated by the motor **102,** and a control section **40** for controlling the operations of the motor **102** and the optical head **103.**

When reading data from a slim disc, the control section **40** makes the motor **102** and the optical head **103** operate under a different operating condition than when reading data from a normal thickness disc. This "operating condition" includes the number of revolutions of the motor **102,** the gain of a focus control, and a radial location on the disc to be irradiated with the light beam. That is to say, depending on whether the optical disc **101** loaded is a normal thickness disc or a slim disc, at least one of the operating condition parameters, including the number of revolutions of the motor **102,** the focus control gain, and a radial location to be irradiated with the light beam, is changed. For example, if the optical disc loaded has turned out to be a slim disc, the number of revolutions of the motor may be increased compared to the setting for a normal thickness disc. As a result, the warp of a slim disc, which is not rigid enough to avoid warping, can be minimized by rotating it at a high frequency. On top of that, by controlling the operating condition adaptively to a slim disc, read errors can be reduced significantly, too.

In one preferred embodiment of the present invention, the control section **40** includes a disc type recognition section **50** for determining whether the disc **101** loaded is a slim disc or not. If the disc type recognition section **50** has recognized the disc **101** loaded to be a slim disc, the control section **40** may raise the lower limit of the number of revolutions of the motor **102,** for example.

Nevertheless, the optical disc drive does not always have to include such a disc type recognition section 50. If an optical disc drive without such a disc type recognition section **50** has operated the motor and the optical head under such an operating condition for reading data from a normal thickness disc only to fail to read data properly from the disc **101** loaded, then at least a part of that operating condition may be changed into one for reading data from a slim disc. This is because if data cannot be read properly from the optical disc **101** loaded by operating the motor **102** and the optical head **103** under such an operating condition for reading data from a normal thickness disc, probably the disc **101** loaded is a slim disc.

Hereinafter, preferred embodiments of the present invention will be described with reference to the accompanying drawings.

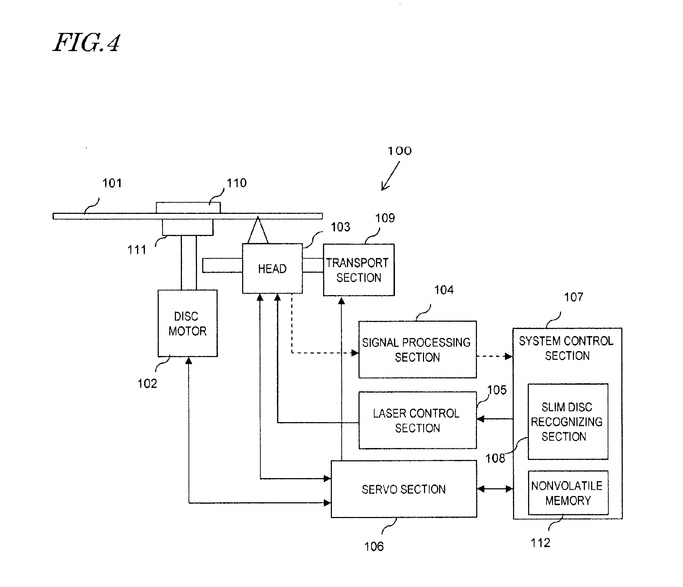

FIG. **4** is a block diagram illustrating a configuration for an optical disc drive **100** as first specific preferred embodiment of the present invention.

As shown in FIG. **4****,** the optical disc drive **100** includes a turntable **111,** a disc motor **102,** a disc clamper **110,** an optical head **103,** a transport section **109,** a signal processing section **104,** a laser control section **105,** a servo section **106,** and a system control section **107.** The turntable **111** is provided to mount an arbitrary optical disc **101** (which may be a Blu-ray Disc, for example) thereon, and is secured to a shaft and turned by the disc motor **102.** When the disc **101** is loaded into this optical disc drive **100,** the disc clamper **110** clamps the disc **101** onto the turntable **111** and the optical head **103** irradiates the disc **101** with a laser beam. To start an actual read operation, the transport section **109** (such as a traverse motor) moves the optical head **103** to a target radial location on the disc **101.** Then, the read signal generated by the optical head **103** is binarized by the signal processing section **104,** which also generates a clock signal to synchronize the timings of operations of these components. To get the read operation done properly, the laser control section **105** controls the power and pulse width of a laser beam emitted from the optical head **103,** while the servo section **106** controls the number of revolutions of the disc motor **102** and the operation of the optical head **103.** To perform an overall control on this optical disc drive **100,** the system control section **107** sets the laser power for the laser control section **105,** and issues a control command to the servo section **106.** The system control section **107** interprets the signal supplied from the signal processing section **104,** thereby decoding the data that has been obtained from the optical disc **100.**

The system control section **107** includes a slim disc recognizing section **108** for determining, by the number of revolutions of the optical disc **101** and the signal obtained from the optical disc **101,** whether the optical disc **101** loaded is a slim disc or not. A nonvolatile memory **112** that stores various sorts of information, including information about what kinds of errors have occurred in the optical disc drive **100** so far, is also included in the system control section **107.**

In the optical disc drive **100** of this preferred embodiment, the slim disc recognizing section **108** is built in the system control section **107.** However, the slim disc recognizing section **108** may also be either provided as an independent functional block in this optical disc drive **100** or even built in any other circuit section.

The signal processing section **104,** the laser control section **105,** the servo section **106** and the system control section **107** may be implemented as either hardware circuits only or a combination of a software program and hardware circuits. Specifically, the function of each of these sections is preferably carried out by one or multiple processors manufactured by integrated circuit technologies and a program that is defined to control the operation of that/those processor(s). In this preferred embodiment, the system control section **107** and the slim disc recognizing section **108** are supposed to instruct the laser control section **105** and the servo section **106** what to do by issuing commands for them.

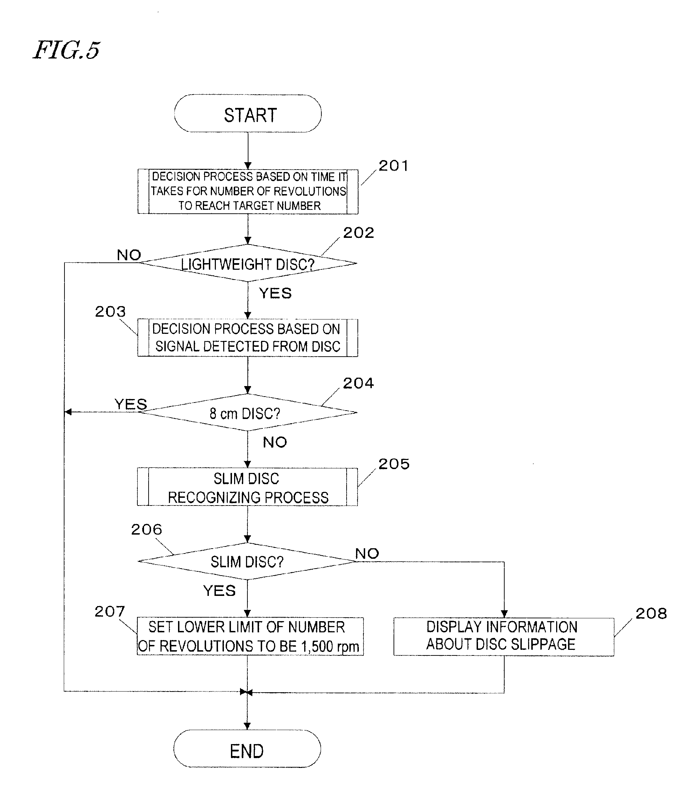

Hereinafter, it will be described in detail with reference to a flowchart exactly how the slim disc recognizing section **108** recognizes a slim disc. First off, look at FIG. **5****,** which is a flowchart showing the overall procedure of determining what type of optical disc has been loaded into this optical disc drive **100.**

As shown in FIG. **5****,** in Step **201,** on sensing that an optical disc **101** has been loaded, the slim disc recognizing section **108** issues a control command to the servo section **106,** makes the disc motor **102** rotate the optical disc **101,** and then measures, using a timer (not shown), how long it has taken for the number of revolutions of the disc motor **102** to reach a target number. Then, by comparing this waiting time measured to a preset reference time, the slim disc recognizing section **108** determines whether the disc loaded in Step **201** is a normal 12 cm disc or a lightweight disc, which has a lighter weight than the normal 12 cm disc. As used herein, the "lightweight disc" refers to either an 8 cm disc or a slim disc. In any case, the moment of inertia of a lightweight disc is so much smaller than that of a 12 cm disc that a lightweight disc can be rotated easily by the motor. That is why if the disc loaded is a lightweight disc, the number of revolutions of the motor should reach the target number in a shorter time than a situation where the disc loaded is a 12 cm disc. Thus, if the time it has taken for the number of revolutions of the motor to reach the target one is actually measured and compared to an appropriately set reference time, the optical disc loaded can be easily determined to be either a lightweight disc or a normal 12 cm disc.

In this preferred embodiment, the reference time to decide whether the disc loaded is a lightweight disc or not is set to be 100 ms. However, this is only an example and the reference time may also be changed into any other value according to the structure of the motor or any other factor. It will be described later exactly how to set the reference time.

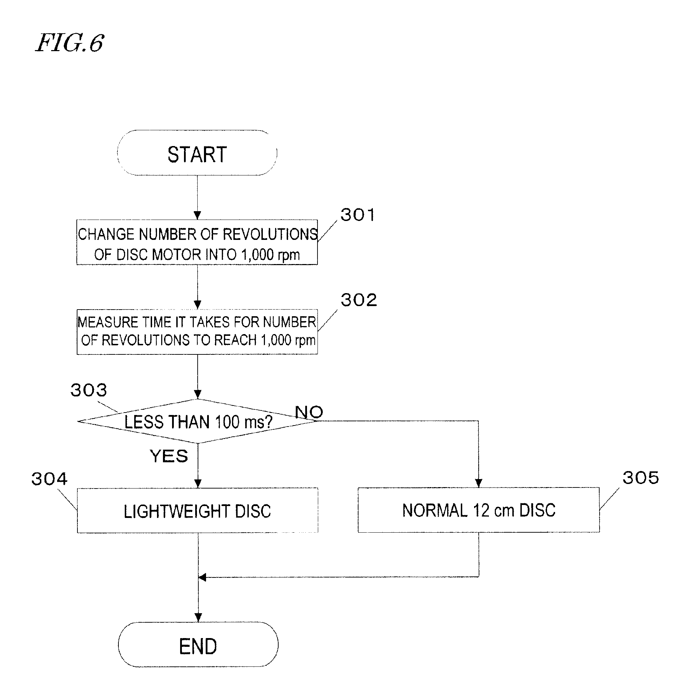

Hereinafter, it will be described in further detail with reference to FIG. **6** specifically how this processing step **201** is carried out. FIG. **6** is a flowchart showing an exemplary detailed procedure through which the optical disc drive **100** performs a disc type recognition process by detecting the amount of time it has taken for the number of revolutions of the motor to reach a target one.

In the example shown in FIG. **6****,** first of all, in Step **301,** the slim disc recognizing section **108** issues a command to the servo section **106,** thereby setting the target number of revolutions of the disc motor **102** to be 1,000 rpm. Next, in Step **302,** using a timer (not shown), the slim disc recognizing section **108** measures the amount of time it has taken for the number of revolutions of the disc motor **102** to actually reach 1,000 rpm under the control of the servo section **106.** Although the target number of revolutions is set to be 1,000 rpm in this example, the target number may also be set to be any other value as well.

Next, in Step **303,** the slim disc recognizing section **108** determines whether or not the waiting time measured in the previous processing step **302** is less than 100 ms, which is a reference time. If the answer is YES (i.e., waiting time < 100 ms), the process advances to Step **304,** in which the disc loaded is recognized to be a lightweight disc. Otherwise (i.e., waiting time ≧ 100 ms), the process advances to Step **305,** in which the disc loaded is recognized to be a normal 12 cm disc. It should be noted that the number of revolutions of the disc motor **102** to be set in Step **301** and the reference time for use to make the decision in Step **303** may be any arbitrary values as long as the disc loaded can be determined to be either a lightweight disc or a normal 12 cm disc.

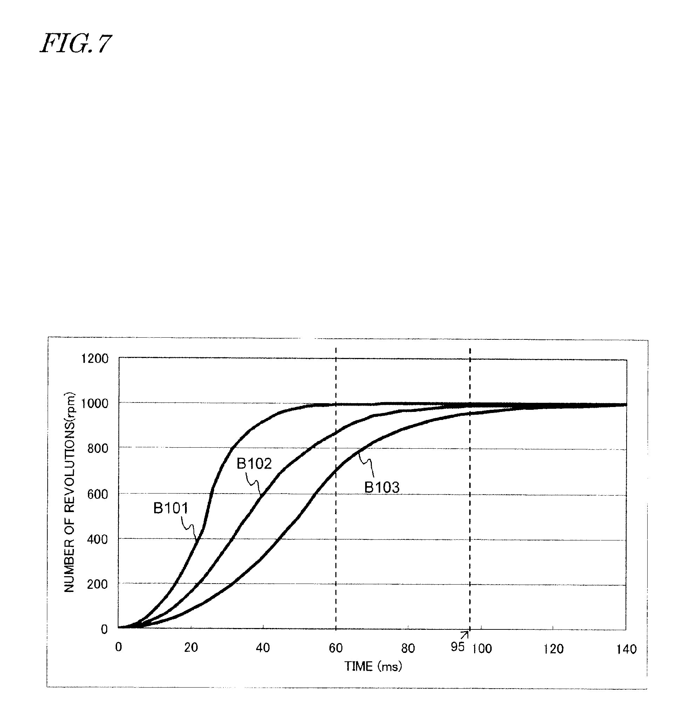

Hereinafter, the relation between the number of revolutions of the motor and the running time will be described with reference to FIG. **7****,** which is a graph showing how the number of revolutions of the disc motor **102** changes with the amount of time that has passed since the motor **102** started to rotate with the optical disc mounted thereon. In FIG. **7****,** the curves **B101, B102** and **B103** represent data that was collected from an 8 cm disc, a slim disc and a normal 12 cm disc, respectively.

It took 60 ms, 95 ms and 140 ms for the number of revolutions to reach 1,000 rpm in the cases of the 8 cm disc, slim disc and normal 12 cm disc, respectively. In this manner, it will take a different amount of time for the number of revolutions of the motor to reach the target one according to the type of the optical disc loaded because these three types of optical discs have mutually different moments of inertia. The reference time for use to determine the type of the disc loaded in Step **303** shown in FIG. **6** may be set to be an arbitrary value between 95 ms and 140 ms.

Now look at FIG. **5** again. If the optical disc **101** loaded has been recognized to be a normal 12 cm disc (e.g., a DVD-ROM) in Step **202** shown in FIG. **5****,** then the disc type recognition process ends. On the other hand, if the disc loaded has turned out to be a lightweight disc, then the process advances to Step **203.**

In Step **203,** based on the signal that has been detected by the optical head **103** from the optical disc **101,** the slim disc recognizing section **108** determines whether the disc loaded is an **8** cm disc or a slim disc.

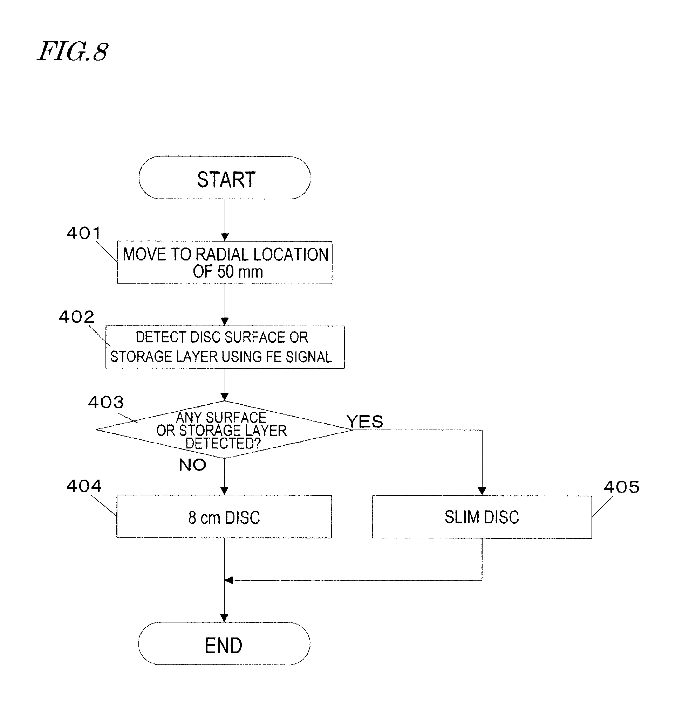

Hereinafter, it will be described in further detail with reference to FIG. **8** exactly how this processing step **203** is carried out. FIG. **8** is a flowchart showing the procedure through which the optical disc drive **100** performs a disc type recognition based on the signal received from the disc. First of all, in Step **401,** the slim disc recognizing section **108** issues a command to the servo section **106,** thereby instructing the transport section **109** to move the optical head **103** to a radial location of 50 mm on the optical disc **101.** It should be noted that the location to which the optical head **103** is moved in this processing step does not have to be a radial location of 50 mm but may also be any other location as long as at that location, there is no disc surface or storage layer of an 8 cm disc but there is either the disc surface or a storage layer of a 12 cm disc.

Next, in Step **402,** the slim disc recognizing section **108** issues a command to the servo section **106** to make the optical head **103** detect either the disc surface or a storage layer using a focus error signal.

If it has turned out in Step **403** that any disc surface or any storage layer has been detected in the processing step **402,** the process advances to Step **405,** in which the disc loaded is recognized to be a 12 cm disc. On the other hand, if it has turned out in Step **403** that no disc surface or storage layer has been detected in the processing step **402,** then the process advances to Step **404,** in which the disc loaded is recognized to be an 8 cm disc. Since no disc surface or storage layer can be detected if the disc loaded is an 8 cm disc, the disc loaded can be determined to be either an 8 cm disc or a 12 cm disc without fail according to this method.

Now look at FIG. **5** once again. If the optical disc loaded **101** has turned out to be an 8 cm disc in Step **204** shown in FIG. **5****,** the disc type recognition process ends. On the other hand, if the optical disc loaded **101** has turned out to be a non-8 cm disc (i.e., a 12 cm disc), then the process advances to Step **205.**

In this manner, according to this preferred embodiment, if the disc loaded has turned out in Step **204** to be a non-8 cm disc, the process advances to Step **205** to decide whether the optical disc loaded is a slim disc or not. This needs to be done because even if the disc loaded is not a slim disc but actually a normal 12 cm disc, that disc could be taken for a lightweight disc by mistake in Step **202.** Optionally, instead of making such a strict decision, if the disc loaded has turned out to be a non-8 cm disc in Step **204,** then that disc may be determined to be an 8 cm disc automatically to omit the processing steps **205** and **206.** In that case, the process advances to Step **207** of setting a lower limit to the number of revolutions of the motor. According to this modified example, even a non-slim disc could be recognized to be a slim disc by mistake. Nevertheless, as far as the read operation is concerned, there should be no problem at all. Rather the read operation can be carried out with more stability by setting a lower lim0it to the number of revolutions in Step **207.**

According to this preferred embodiment, if the optical disc loaded has turned out in Step **204** to be a non-8 cm disc (i.e., a 12 cm disc), it may be determined that disc slippage has occurred. As will be described later, even if the disc loaded is a normal 12 cm disc, the number of revolutions of the motor could reach its target number in a short time due to disc slippage. In that case, this procedure may be modified so that the process advances to Step **208** of displaying information about disc slippage with the processing steps **205** and **206** skipped. It is known that since a slim disc is heavier than an 8 cm disc, the number of revolutions of the motor on which a slim disc is mounted should reach, considering its moment of inertia, a predetermined value later than when the disc loaded is an 8 cm disc and earlier than when the disc loaded is a 12 cm disc (see FIG. **7****).** That is why in this modified example, even if the disc loaded is a slim disc, it can still be determined properly whether or not disc slippage has occurred by setting a decision threshold value between the time it takes for the motor with an 8 cm disc to reach a predetermined number of revolutions and the time it takes for the motor with a slim disc to reach it in Step **303** shown in FIG. **6****.** According to the data shown in FIG. **7****,** for example, the decision threshold value may be set somewhere between 60 ms and 95 ms. This modified example is applicable particularly effectively to a system that can perform a read operation with good stability even on a slim disc loaded without taking any special measures against its axial runout (e.g., a system in which the motor can always rotate at 2,000 rpm or more during reading).

According to this preferred embodiment, unless any of those simplified processes is adopted, the slim disc recognizing section **108** determines, in Step **205** shown in FIG. **5****,** by reference to the information provided by the servo section **106** or the signal processing section **104,** whether the disc loaded is a slim disc or not.

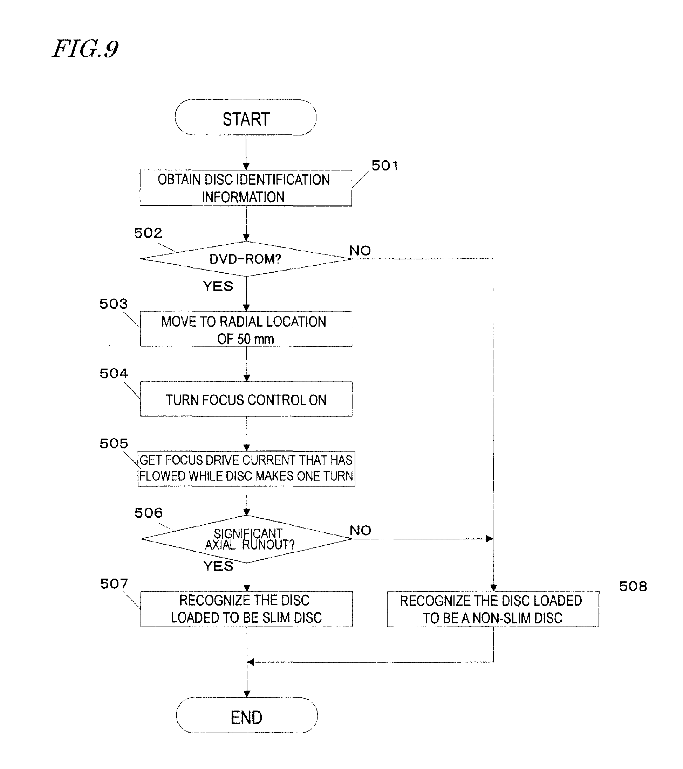

Hereinafter, it will be described in further detail with reference to FIG. **9** specifically how this processing step **205** is performed. FIG. **9** is a flowchart showing a procedure through which the optical disc drive **100** decides, by reference to the information provided by the servo section **106** or the signal processing section **104,** whether the disc loaded is a slim disc or not. It should be noted that the series of processing steps shown in FIG. **9** are supposed to be started when the disc is already rotating. Thus, if the disc has not started rotating yet, the servo section **106** is instructed to rotate the disc motor **102** before the processing step **501** starts to be performed.

First, in Step **501,** the signal processing section **104** processes the signal supplied from the optical head **103,** thereby obtaining disc identification information from the optical disc **101.** As used herein, the disc identification information refers to the information that is stored in the control data area of a disc to indicate the type, storage capacity, and size (which may be either 8 cm or 12 cm) of the disc.

Next, in Step **502,** it is determined, by reference to the information that has been obtained in the previous processing step **501,** whether the disc loaded is a DVD-ROM or not. If the answer is NO, the process advances to Step **508** in which the disc loaded is determined to be a non-slim disc. On the other hand, if the answer is YES, then the process advances to Step **503** to continue this process.

Subsequently, as in Step **401,** the slim disc recognizing section **108** issues a command in Step **503** to the servo section **106,** thereby instructing the transport section **109** to move the optical head **103** to a radial location of 50 mm on the optical disc **101.** It should be noted that the location to which the optical head **103** is moved in this processing step does not have to be a radial location of 50 mm but may also be any other location where the axial runout of the disc can be detected. Also, if the focus control needs to be turned OFF when the optical head **103** is moved, then this processing step **503** is performed after having turned the focus control OFF.

Thereafter, in Step **504,** the slim disc recognizing section **108** issues a command to the servo section **106** to turn the focus control on the optical disc **101** ON. Then, in Step **505,** the slim disc recognizing section **108** issues another command to the servo section **106** to get the amount of focus drive current that has flowed while the disc makes one turn, thereby measuring the magnitude of the axial runout of the optical disc **101.**

Next, if the variation in focus drive current that has been measured in the previous processing step **505** corresponds to an axial runout of 0.3 mm or more at the outer edge of the disc, for example, then the disc loaded is determined in Step **506** to have caused a significant axial runout and recognized to be a slim disc in Step **507.** On the other hand, if the disc loaded is determined in Step **506** to have caused no significant axial runout, then the process advances to Step **508** in which the disc loaded is recognized to be a non-slim disc. It should be noted that the threshold value for use to decide whether the axial runout is significant or not does not have to be 0.3 mm but may be arbitrarily set by the designer because the magnitude of the axial runout varies with the coil resistance and other factors and may or may not be allowable depending on what kind of system is used.

Also, the measuring processing step **505** may be carried out at multiple different numbers of revolutions (e.g., at a relatively small number of revolutions of 800 rpm and at a relatively large number of revolutions of 2,000 rpm). And if the results of these measurements are quite different, then it may be determined in Step **506** that the axial runout is significant.

Now let's go back to the flowchart shown in FIG. **5****.** If it has turned out in Step **206** that the optical disc loaded **101** is a slim disc, then the system control section **107** sets in the next processing step **207** the lower limit of the number of revolutions of the optical disc **101** to be at least 1,500 rpm, thereby minimizing the axial runout of the disc with the centrifugal force of the disc rotating increased.

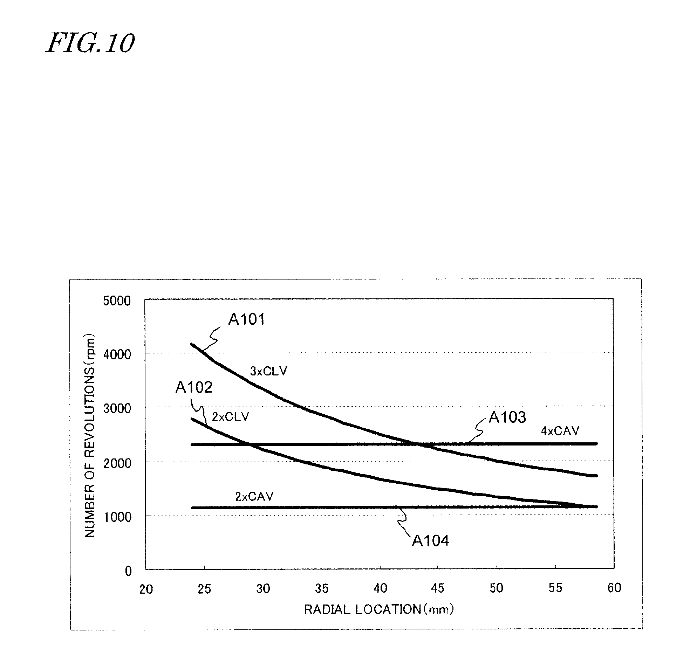

Hereinafter, it will be described with reference to FIG. **10** exactly how to set a lower limit to the number of revolutions in Step **207.** FIG. **10** is a graph showing how the number of revolutions changes according to the radial location on an optical disc on which a read operation is being performed.

In the following example, the number of revolutions of an optical disc is supposed to be controlled by one of CAV (constant angular velocity) and CLV (constant linear velocity) methods, which are two major methods for controlling the number of revolutions of optical discs.

As indicated by the lines **A103** and **A104,** according to the CAV method, the number of revolutions is always constant irrespective of the radial location. In FIG. **10****,** the lines **A103** and **A104** indicate the results obtained by adopting a 4x CAV method and a 2x CAV method, respectively.

On the other hand, according to the CLV method, the number of revolutions is changed with the radial location to keep the relative velocity of the disc with respect to the optical head constant as indicated by the curves **A101** and **A102.** In FIG. **10****,** the curves **A101** and **A102** indicate the results obtained by adopting a 3x CLV method and a 2x CLV method, respectively.

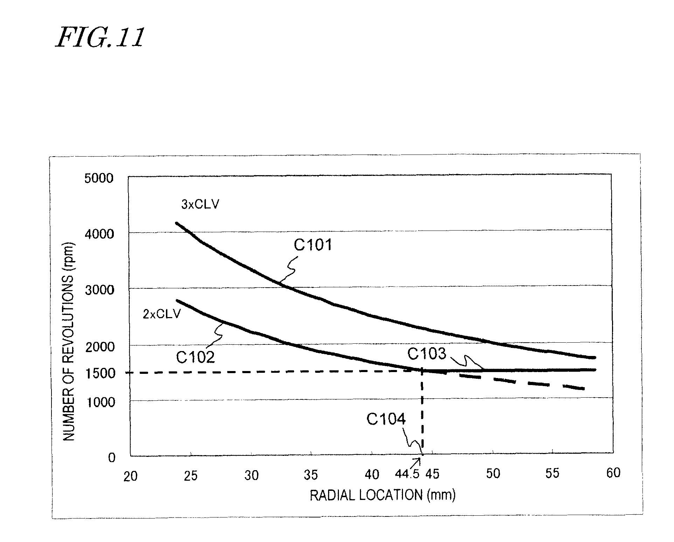

Next, it will be described with reference to FIG. **11** how to set a lower limit to the number of revolutions by the CLV method. FIG. **11** shows how a lower limit may be set to the number of revolutions by 3x CLV or 2x CLV. In FIG. **11****,** the curve **C101** shows how the number of revolutions changes with the radial location according to the 3x CLV method, while the curve **C102** shows how the number of revolutions changes with the radial location according to the 2x CLV method.

If the number of revolutions of the optical disc is controlled by 3x CLV, the number of revolutions is always equal to or greater than 1,500 rpm at every radial location as indicated by the curve **C101,** and therefore, there is no need to change the modes of control. On the other hand, if the number of revolutions of the optical disc is controlled by 2x CLV, the number of revolutions is less than 1,500 rpm at radial locations that are closer to the disc outer edge than a radial location **C104** (of approximately 44.5 mm) is, at which the number of revolutions is 1,500 rpm. That is why if the disc loaded has turned out to be a slim disc, a lower limit can be set to the number of revolutions by controlling the number of revolutions as indicated by the line **C103.**

If the number of revolutions is controlled by the CAV method, the number of revolutions is always constant irrespective of the radial location. That is why if the optical disc loaded has turned out to be a slim disc while its number of revolutions is controlled by 2x CAV, by which the number of revolutions would usually be less than 1,500 rpm as indicated by the line **A104** in FIG. **10****,** then the rates of the CAV control may be changed (into 4x CAV as indicated by the line **A103)** so as to increase the number of revolutions to more than 1,500 rpm.

It should be noted that the rates of control may also be changed into any other rate as long as the number of revolutions can be increased to more than 1,500 rpm. For instance, even a number of revolutions control method of a different mode (such as 3x CLV as indicated by the curve **A101** in FIG. **10**) could also be used.

Optionally, instead of always setting a lower limit to the number of revolutions, the lower limit could be set only when a recovery process needs to be done in order to remove an error that has occurred during reading, for example.

Let's go back to FIG. **5****.** If the disc loaded has turned out to be a non-slim disc in Step **206** shown in FIG. **5****,** then it is determined that disc slippage (i.e., misalignment of the disc) has occurred and information about the disc slippage is output to a display section (not shown) in Step **208.** It can be determined in this processing step **208** that disc slippage have occurred because the disc loaded has turned out to be a lightweight disc in Step **202** and yet has been recognized to be neither an 8 cm disc (in Step **204)** nor a slim disc (in Step **206).** That is to say, it can be determined that optical disc have been loaded improperly (i.e., slips) in that case.

Thus, in this processing step **208,** an alert saying "please use disc turntable cleaner", for example, may be displayed on the monitor screen of a TV, to which this optical disc drive **100** is connected. As used herein, the disc turntable **111** is a table for rotating the optical disc **101** that is mounted thereon. While the disc **101** is rotating, the disc turntable **111** is located under the clamp area and is also turning along with the disc **101.** If the turntable **111** has gathered dust, for example, the disc **101** will slip easily.

As to when to output such information about the disc slippage, information about the number of times disc slippage has occurred so far may be stored in the nonvolatile memory **112** and may be displayed only when the number of times of occurrence exceeds a predetermined number. Or that information may also be output when an error is indicated as a result of an analysis that has been made at the time of a failure.

Furthermore, if disc slippage has occurred, the acceleration, with which the disc in rest position starts to be rotated from next time on, may be decreased or a clamp force, with which the disc starts to be rotated from next time on, may be increased so that such disc slippage will never happen again. Also, if the disc loaded has turned out to be a slim disc, it is not always necessary to set a lower limit to the number of revolutions but any other measure may also be taken to perform a servo control with good stability on a disc that is producing a significant axial runout. Examples of such countermeasures include increasing the gain of the focus control, performing a retry (i.e., an error recovery process) on an inner area of the disc (e.g., inside of a radial location of 40 mm) to be affected less by the axial runout, moving the objective lens toward the disc more slowly when the focus needs to be set on an outer area of the disc (e.g., outside of a radial location of 50 mm), and changing the modes of control of the servo section **106** according to the angle of the disc that corresponds to one period of the axial runout of the disc.

In any case, by performing these processing steps, it can be determined whether the optical disc loaded is a slim disc or not, and the servo control can be performed with good stability.

### Alternative decision steps for Step 205 shown in FIG. 5

### (consisting of processing steps shown in FIG. 9)

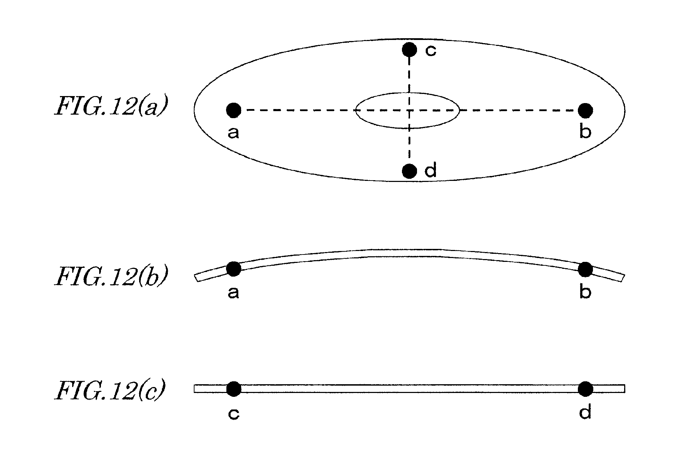

FIG. **12(a)** is a perspective view illustrating a slim disc, while FIGS. **12(b)** and **12(c)** are cross-sectional views thereof as respectively viewed on the planes **a-b** and **c-d** shown in FIG. **12(a)****.** As can be seen from FIGS. **12(a), 12(b)** and **12(c)****,** this slim disc is warped along the dashed line that connects the points **a** and **b** together with respect to a ridge indicated by the dashed line that connects the points **c** and **d** together. Even if the level of the storage layer has varied by a matter of several µm due to this warp, a focus error could still be generated.

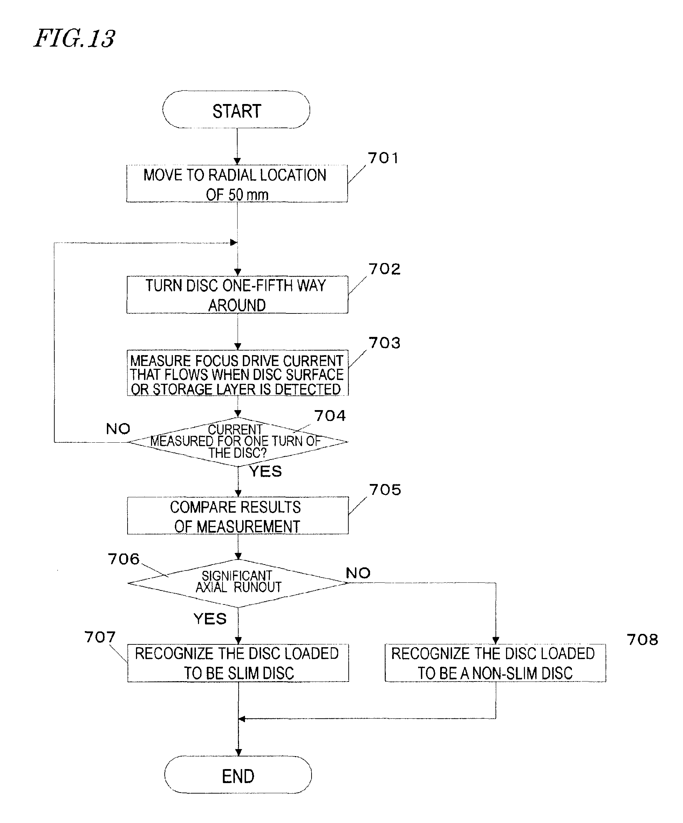

As shown in FIG. **12****,** since a slim disc has a small substrate thickness, its outer edge tends to bend easily downward due to its own weight. By taking advantage of such a property of a slim disc, the decision processing steps shown in FIG. **9****,** which are detailed processing steps of Step **205** shown in FIG. **5** in the preferred embodiment described above, may be replaced with the ones shown in FIG. **13****.** The decision method shown in FIG. **13** can be applied particularly effectively to such a situation where the outer edge of a slim disc bends downward due to its own weight as shown in FIG. **12****.**

FIG. **13** is a flowchart showing the procedure of a process for determining whether or not the disc shown in FIG. **12** will produce a significant axial runout. It should be noted that the series of processing steps shown in FIG. **13** are supposed to be started when the disc is still in rest position and is not rotating yet. Thus, if the disc is already rotating, the servo section **106** is instructed to stop the disc motor **102** before the processing step **701** starts to be performed.

First, in Step **701,** the slim disc recognizing section **108** issues a command as in Steps **401** and **503** to the servo section **106,** thereby instructing the transport section **109** to move the optical head **103** to a radial location of 50 mm on the optical disc **101.**

Next, in Step **702,** the slim disc recognizing section **108** issues a command to the servo section **106** to turn the disc motor **102** one-fifth way around (i.e., 72 degrees). In this processing step **702,** the disc motor **702** may also be turned to any arbitrary degree as long as it can be determined whether or not the disc is producing a significant axial runout. In any case, one turn of the disc is preferably divided evenly by an odd number (which may be a prime number other than two). This is because if one turn of the disc were divided evenly by an even number and if the disc were producing an axial runout symmetrically to the disc radius as shown in FIG. **12****,** then sometimes the decision could not be made properly.

Subsequently, in Step **703,** the slim disc recognizing section **108** issues a command to the servo section **106** to move the objective lens (not shown) of the optical head **103** up toward the disc and measure the amount of focus drive current that flows when the disc surface or some storage layer is detected using a focus error signal.

Next, in Step **704,** these two processing steps **702** and **703** are carried out a number of times until the measurement can be done the entire way around the disc. In this example, the same two processing steps are repeated five times.

Thereafter, if it has been determined in Step **704** how much focus drive current has flowed while disc has made one turn, then the results of measurement that have been obtained in Step **703** are compared to each other in the next processing step **705,** thereby confirming the magnitude of the variation. In this case, if the difference between the maximum and minimum amounts of focus drive current measured is equal to or greater than a focus drive current value corresponding to the magnitude of the axial runout of the disc of 0.3 mm, then the variation is determined to be significant.

Next, if it has been determined in Step **706** that the variation is significant as a result of the comparison that has been made in the previous processing step **705,** the process advances to Step **707** in which the disc loaded is determined to be a slim disc. On the other hand, if the answer to the query of the processing step **706** is NO, then the process advances to Step **708** in which the disc loaded is determined to be a non-slim disc.

As described above, by using the optical disc drive and optical disc type recognition method of the preferred embodiment described above, it can be determined whether or not the optical disc loaded in the optical disc drive is a slim disc, and a read operation can be performed with good stability even on a slim disc that could produce a significant axial runout.

Optionally, the processing step **203** shown in FIG. 5 may be replaced by one of the following two alternative processing steps without performing the processing steps **401** to **403** shown in FIG. **8****.** One alternative processing step is determining, by reference to the disc size included in the disc identification information obtained in Step **501** shown in FIG. **9****,** whether disc loaded is a 12 cm disc or not. The other alternative processing step is determining, by reference to the 8 cm disc's maximum storage capacity also included in that disc identification information, whether the storage capacity of the disc loaded is greater than the maximum storage capacity of an 8 cm disc.

In the preferred embodiments of the present invention described above, the optical disc drive is supposed to always recognize the type of the disc loaded by itself. However, this is just an example of the present invention. Alternatively, by using some input device (not shown in FIG. **4**), the user can tell the optical disc drive whether the disc loaded in the optical disc drive is a slim disc or not. In that case, the processing steps **201** through **206** shown in FIG. **5** can be omitted altogether.

It should be noted that the preferred embodiments of the present invention described above are applicable to not just a so-called "slim disc" but also any other disc that has a thinner substrate or a lighter overall weight than a normal optical disc. As for a BD, for example, its storage layer is located at a depth of 0.1 mm under the disc surface. That is why a slim disc with a substrate thickness of approximately 0.1 mm could be made by reducing the thickness of the cover layer, and the preferred embodiments of the present invention are also applicable to such a slim disc with a substrate thickness of approximately 0.1 mm.

Furthermore, the preferred embodiments of the present invention described above are also applicable to a bonded slim disc, which has a combined substrate thickness of approximately 0.7 mm and in which a BD with a substrate thickness of 0.1 mm and a DVD with a substrate thickness of 0.6 mm have been bonded together. Therefore, the substrate thickness of slim discs does not have to be 0.6 mm or less. Rather, the preferred embodiments of the present invention described above are applicable to any slim disc as long as it can be distinguished from a normal 12 cm disc in Step **201** shown in FIG. **5** by its substrate thickness (which may be 1.0 mm, for example).

By using the optical disc drive and optical disc type recognition method of the present invention, it can be determined whether the disc loaded in the optical disc drive is a slim disc or not, and a read operation can be performed with stability even on a slim disc that could produce a significant axial runout. Thus, the present invention is applicable effectively to recorders, players, PCs and various other devices that use an optical disc.

While the present invention has been described with respect to preferred embodiments thereof, it will be apparent to those skilled in the art that the disclosed invention may be modified in numerous ways and may assume many embodiments other than those specifically described above. Accordingly, it is intended by the appended claims to cover all modifications of the invention that fall within the true spirit and scope of the invention.

## Claims

1. An optical disc drive with the ability to read data from both a normal thickness disc, which has a thickness of 1.2 mm and that has stored data thereon, and a slim disc, which has a thickness of 1.0 mm or less and that has also stored data thereon, the drive comprising:
a motor for rotating a disc loaded;
an optical head for focusing a light beam on the disc that is being rotated by the motor; and
a control section for controlling the operations of the motor and the optical head,
wherein when reading data from the slim disc, the control section makes the motor or the optical head operate under a different operating condition than when reading data from the normal thickness disc.

2. The optical disc drive of claim 1, wherein the operating condition includes at least one of the number of revolutions of the motor, the gain of a focus control, and a radial location on the disc at which the light beam that irradiates the disc needs to be focused.

3. The optical disc drive of claim 1, wherein the control section includes a disc type recognition section for determining whether the disc loaded is a slim disc or not.

4. The optical disc drive of claim 1, wherein if the disc loaded is the slim disc, the control section raises the lower limit of the number of revolutions of the motor.

5. The optical disc drive of claim 1, wherein if data cannot be read properly from the disc loaded by operating the motor and the optical head under an operating condition for reading the data from the normal thickness disc, at least a part of that operating condition is changed into an operating condition for reading data from the slim disc.

6. A method for reading data from an optical disc loaded by using an optical disc drive that is compatible with both a normal thickness disc, which has a thickness of 1.2 mm and that has stored data thereon, and a slim disc, which has a thickness of 1.0 mm or less and that has also stored data thereon, the method comprising the steps of:
rotating the optical disc loaded;
irradiating the optical disc with a light beam; and
if the optical disc loaded is the slim disc,
making the optical disc drive operate under a different operating condition from when reading data from the normal thickness disc.

7. The method of claim 6, comprising a disc type recognizing step for determining whether the disc loaded is the slim disc or not.

8. The method of claim 6, comprising:
a first disc type recognizing step for determining, depending on how long it has taken for the number of revolutions of a motor that rotates the optical disc to reach a predetermined number, whether the optical disc loaded is a lightweight disc or not; and
a second disc type recognizing step for determining, based on a signal that has been obtained from the disc loaded, whether the optical disc is an 8 cm disc or a 12 cm disc, and
wherein if the optical disc loaded has been determined to be a lightweight disc and a 12 cm disc as a result of the first and second disc type recognizing steps, respectively, then the optical disc loaded is recognized to be a slim disc.

9. The method of claim 6, comprising:
a first disc type recognizing step for determining, depending on how long it has taken for the number of revolutions of a motor that rotates the optical disc to reach a predetermined number, whether the optical disc loaded is a lightweight disc or not; and
a second disc type recognizing step for determining, based on a signal that has been obtained from the disc loaded, whether the optical disc is an 8 cm disc or a 12 cm disc, and
wherein if the optical disc loaded has been determined to be a lightweight disc and a 12 cm disc as a result of the first and second disc type recognizing steps, respectively, then it is determined that disc slippage has occurred.

10. The method of claim 8, wherein the second disc type recognizing step includes the steps of:
if the optical disc has been determined to be an 8 cm disc,
moving an optical head to a radial location outside of a data area; and
if either the surface or a storage layer of the optical disc loaded has been detected by a focus error signal,
determining the optical disc loaded to be a 12 cm disc.

11. The method of claim 8, wherein the second disc type recognizing step includes the steps of:
retrieving identification information of the optical disc from the optical disc loaded; and
determining, by reference to disc size information included in the identification information, whether the optical disc is a 12 cm disc or not.

12. The method of claim 8, further comprising a third disc type recognizing step for determining the optical disc loaded to be a slim disc if a signal obtained from the optical disc loaded indicates that the axial runout of the optical disc is greater than a predetermined value.
